Europäisches Patentamt

European Patent Office

Office européen des brevets

(19)

(11) Veröffentlichungsnummer: **0 111 878**
A2

## (12) EUROPÄISCHE PATENTANMELDUNG

(21) Anmeldenummer: 83112535.6

(22) Anmeldetag: 13.12.83

(51) Int. Cl.³: **C 04 B 15/06**
**B 01 J 20/10**

(30) Priorität: 13.12.82 DE 3246053

(43) Veröffentlichungstag der Anmeldung:
27.06.84 Patentblatt 84/26

(84) Benannte Vertragsstaaten:
AT BE CH FR GB IT LI LU NL SE

(71) Anmelder: Krämer, Walter, Ing. Chem.
Uhlenkamp 1
D-3040 Soltau-Friedrichseck(DE)

(72) Erfinder: Krämer, Walter, Ing. Chem.
Uhlenkamp 1
D-3040 Soltau-Friedrichseck(DE)

(74) Vertreter: Beszédes, Stephan G. Dr.
Münchener Strasse 80a Postfach 1168
D-8060 Dachau(DE)

(54) Verfahren zur Herstellung von Silicium, Calcium und Sauerstoff in gebundener Form enthaltenden Massen sowie Ab-beziehungsweise Adsorptionsmittel für Flüssigkeiten und Gase.

(57) Gegenstand der Erfindung ist ein Verfahren zur Herstellung von Sillicium, Calcium und Sauerstoff in gebundener Form enthaltenden Massen durch Umsetzungen herbeiführendes Vermischen der Verbindungen von Silicium und/oder Calcium mit Sauerstoff enthaltenden Ausgangsmaterialien in Molverhältnissen von CaO zu $SiO_2$ von nicht mehr als 0,75 : 1 entsprechenden Mengen unter Homogenisieren derselben in Wasser, Formen, Autoklavenhärten und, gegebenenfalls nach einem Zerkleinern erfolgendes, Trocknen sowie gegebenenfalls Klassieren, bei welchem als Ausgangsmaterialien mineralische Naturprodukte und/oder industrielle Produkte mit hoher spezifischer Oberfläche, in welchen reaktionsfähiges $SiO_2$ vorliegt und/oder die $SiO_2$-Form von amorpher Struktur ist, und Calciumoxyd beziehungsweise dieses enthaltende Materialien sowie gegebenenfalls kristallines Siliciumdioxyd beziehungsweise dieses enthaltende Materialien in Molverhältnissen von CaO zu $SiO_2$ von 0,4 : 1 bis 0,75 : 1 entsprechenden Mengen eingesetzt werden und so durch das Homogenisieren in Wasser und Autoklavenhärten die eingesetzten mineralischen Naturprodukte und/oder industriellen Produkte mit frisch gebildetem Calciumsilikathydrat belegt werden.

Gegenstand der Erfindung sind auch Ab- beziehungsweise Adsorptionsmittel für Flüssigkeiten und Gase, welche durch dieses Verfahren erhalten worden sind.

Croydon Printing Company Ltd.

Die Erfindung betrifft ein Verfahren zur Herstellung von Silicium, Calcium und Sauerstoff in gebundener Form enthaltenden Massen durch Umsetzungen herbeiführendes Vermischen der Verbindungen von Silicium und/oder Calcium mit Sauerstoff enthaltenden Ausgangsmaterialien in Molverhältnissen von CaO zu $SiO_2$ von nicht mehr als 0,75 : 1 entsprechenden Mengen unter Homogenisieren derselben in Wasser, Formen, Autoklavenhärten und, gegebenenfalls nach einem Zerkleinern erfolgendes Trocknen sowie gegebenenfalls Klassieren.

Für die Ab- beziehungsweise Adsorption von Flüssigkeiten, wie Wasser oder Ölen, ist eine Reihe von Naturprodukten geeignet. Bei diesen handelt es sich vor allem um silikatische Tonminerale mit Faserstruktur, wie Attapulgit und Sepiolith. Ebenso werden Silikaterden, wie Kieselgur, Molaerde und in chemischen Verfahren anfallende Nebenprodukte als Kieselerde für Ad- beziehungsweise Absorptionszwecke eingesetzt. Diese Produkte weisen eine natürliche Teilchengröße von $< 100$ µ, vorzugsweise $< 60$ µ, auf und haben demzufolge eine spezifische Oberfläche mit ausgeprägtem Ad- beziehungsweise Absorptionsverhalten. Der Nachteil dieser natürlichen Produkte besteht jedoch darin, daß sie in Verbindung mit Wasser beziehungsweise Ölen aufquellen, eine plastische Konsistenz erreichen und verklumpen. Dies gilt auch für die verhältnismäßig grobkörnigen Materialien, wie Attapulgit und Sepiolith.

Hinzukommt noch, daß Naturprodukte von der Art von Sepiolith, mineralogisch gesehen Magnesiumsilikate (Meerschaum) mit Verunreinigungen an quellfähigen Tonsubstanzen, verfahrenstechnisch üblicherweise mittels Zerkleinerungsmaschinen aufbereitet und durch Sieben zu geeigneten Korngrößen klassiert werden. Das dabei in erheblicher Menge anfallende Feingut in Korngrößen von < 1,0 mm, vorzugsweise < 0,5 mm, ist aber für die Verwendung als Ab- beziehungsweise Adsorptionsmittel ungeeignet. Es besteht sogar für dessen weitaus größten Teil überhaupt keine technische Verwertung. Ein Grund hierfür lag auch darin, daß bei den bekannten Verfahren der verfahrenstechnische Ablauf auf der Herstellung von steinartigen Körpern, welche nach der Autoklavenerhärtung mechanisch zerkleinert wurden, beruhte. Dieser Zerkleinerungsvorgang ist zwangsläufig mit einem hohen Anfall von Feingut, welcher auch bei Anwendung einer mehrstufigen Zerkleinerung nicht wesentlich vermindert wird, verbunden. Dies bedeutet zum Beispiel für die Gewinnung von Nutzkorn in Korngrößen von 2,0 bis 4,0 mm eine Ausbeute von etwa 60 bis 65%.

Ferner sind Verfahren zur Herstellung von synthetischen Produkten, wie Calciumsilikatprodukten, welche als Ad- beziehungsweise Absorptionsmittel für Wasser und Öle verwendbar sind, bekannt.

So ist aus der deutschen Patentschrift 28 32 194 ein Verfahren zur Herstellung von Calciumsilikatgranulaten beziehungsweise -pulvern mit Mikroporenstruktur durch Umsetzen von kristallinem und gegebenenfalls amorphem Siliciumdioxyd beziehungsweise dieses oder diese enthaltenden Materialien mit Calciumoxyd beziehungsweise dieses enthaltenden Materialien in einem Molverhältnis von CaO zu $SiO_2$ von 0,8 : 1 bis 1,1 : 1 unter Homogenisieren derselben durch Dispergieren der festen Ausgangsstoffe in Wasser unter Zugabe einer vorher in Wasser in Gegenwart von Luft in einen Schaum überführten anionenaktiven grenzflächenaktiven Substanz und Formen sowie Autoklavenhärten, bei welchem als Schaum ein mikroporiger stabiler Schaum, welcher

aus einer durch Verdünnen mit Wasser bereiteten Lösung der anionenaktiven grenzflächenaktiven Substanz in feinster Verteilung in komprimierter Luft erzeugt worden ist und ein Litergewicht von 30 bis 80 g/l aufweist, verwendet wird, wobei die anionenaktive grenzflächenaktive Substanz in einer Menge von etwa 300 bis 600 g/m$^3$ Fertigprodukt eingesetzt wird und ohne Zuschlagstoff gearbeitet sowie das gehärtete Produkt in an sich bekannter Weise zerkleinert, getrocknet und klassiert wird, bekannt. Die Verwendung der nach diesem Verfahren hergestellten Produkte als Ab- beziehungsweise Adsorptionsmittel beziehungsweise Tierstreu ist in der deutschen Offenlegungsschrift 29 02 108 und in der deutschen Auslegeschrift 29 02 079 beschrieben. Das Verfahren der deutschen Patentschrift 28 32 194 beruht auf einer Calciumsilikatsynthese mit nahezu 100%-iger Stoffumwandlung. Es führt zwar zu hervorragenden Produkten, es hat jedoch den Nachteil, daß an die Ausgangsstoffe, insbesondere hinsichtlich ihrer Feinheit und Reinheit, besondere Qualitätsforderungen zu stellen sind, so daß es hinsichtlich des mit ihm verbundenen Aufwandes noch zu wünschen übrig läßt. Auch ist zur Erzielung einer mikroporigen Struktur das Einarbeiten von anionenaktiven Substanzen und das Erzeugen eines Schaumes mit ihnen sowie dessen Einarbeiten in besonderer kritisch festgelegter Weise erforderlich, um den mikroporigen Schaum zu bilden und die Gefügeauflockerung, das heißt die Mikroporigkeit, herbeizuführen, wodurch das Verfahren kompliziert wird.

Ferner ist in der deutschen Offenlegungsschrift 28 32 125 ein Verfahren zur Herstellung von feuerbeständigen maßgenauen Leichtbauplatten mit einer Rohdichte von etwa 160 kg/m$^3$ bis 800 kg/m$^3$ auf der Grundlage von faserverstärkten Calciumsilikatmassen durch Umsetzen von amorphem und kristallinem Siliciumdioxyd beziehungsweise diese enthaltenden Materialien mit Calciumoxyd beziehungsweise dieses enthaltenden Materialien in einem Molverhältnis von CaO zu SiO$_2$ von 0,8 : 1 bis 1,1 : 1 unter Einarbeiten von toxikologisch unbedenklichen Faserstoffen in Gegenwart von Wasser und unter Entwässern erfolgendes Formen und Autoklavenhärten, bei welchem als weiterer Zusatz ein synthetisch hergestelltes Calciumsilikatgranulat beziehungsweise -pulver mit einem Molverhältnis von CaO zu $SiO_2$ von 0,8 : 1 bis 1,1 : 1 verwendet und die Umsetzung vor dem Formen (Vorreaktion) ohne äußere Wärmeanwendung durchgeführt wird, beschrieben. Die Verwendung dieser Produkte als Ab- beziehungsweise Adsorptionsmittel beziehungsweise Tierstreu ist aus den deutschen Offenlegungsschriften 29 02 109 und 29 02 101 bekannt. Auch das Verfahren der deutschen Offenlegungsschrift 28 32 125 führt zwar zu ausgezeichneten Produkten, aber auch in diesem Falle sind an die Ausgangsstoffe, insbesondere hinsichtlich ihrer Feinheit und Reinheit, besondere Qualitätsforderungen zu stellen, so daß es hinsichtlich des mit ihm verbundenen Aufwandes noch nicht ganz befriedigt. Auch sind wiederum kritische Reaktionsbedingungen, insbesondere hinsichtlich der Temperatur und Vorreaktionsdauer, einzuhalten, was das Verfahren kompliziert.

Weiterhin ist aus der deutschen Offenlegungsschrift 2 328 842 ein Verfahren zur Herstellung von wasserhaltigen Calciumsilikatformprodukten, bei welchem zunächst eine konzentrierte wäßrige Aufschlämmung aus einem siliciumhaltigen Material und einem Ausgangsmaterial des Calciumoxydes hergestellt wird, nachfolgend eine Erhitzung der konzentrierten Aufschlämmung in einem Druckbehälter in einer gesättigten Dampfatmosphäre bei einem Druck von mindestens 5,27 kg/cm$^2$ für eine Zeitdauer von mindestens $\frac{1}{2}$ Stunde unter Ausbildung wasserhaltiger Calciumsilikatkristalle erfolgt, dann graduell Wasser zur konzentrierten Aufschlämmung im Druckbehälter zugegeben wird, bis die Verdünnung der Aufschlämmung einen gewünschten Wert erreicht hat, wobei gleichzeitig allmählich der Druck des gesättigten Dampfes innerhalb des Kessels gesenkt und auf annähernd Umgebungsdruck gebracht wird, und die verdünnte Aufschlämmung aus dem Druckbehälter entfernt und in die gewünschte Form gebracht wird und schließlich das Formprodukt getrocknet wird, bekannt. Als siliciumhaltiges Material können natürliches oder synthetisches amorphes Siliciumdioxyd oder Silikat oder Mischungen derselben, beispielsweise Quarz, Siliciumdioxydmehl, siliciumhaltiger Sand, Diatomeenerde, verschiedene Tone, Kieselgel oder dergleichen verwendet werden. Als Molverhältnisse von CaO zu $SiO_2$ sind etwa 0,5 : 1 bis 3,0 : 1 angegeben, wobei Molverhältnisse von CaO zu $SiO_2$ von 0,75 : 1 bis 2,0 : 1 bevorzugt sind. Zwar ist in der deutschen Offenlegungsschrift 2 328 842 das Beispiel offensichtlich wegen einer Übersetzungslücke unvollständig wiedergegeben, indem die Angabe des siliciumhaltigen Materiales fehlt, aus der entsprechenden US-Patentschrift 3 816 149, Spalte 6, Zeilen 25 bis 26 geht jedoch hervor, daß gleiche Gewichtsmengen von Quarz und Kalkhydrat verwendet wurden. Daraus ergibt sich durch Umrechnen ein Molverhältnis von CaO zu $SiO_2$ von 0,81 : 1.

Beim Verfahren der deutschen Offenlegungsschrift 2 328 842 wird also schon gleich die konzentrierte Aufschlämmung der Autoklavenbehandlung unterworfen und während dieser die Aufschlämmung mit Wasser verdünnt und erst danach geformt und schließlich getrocknet. Anders ausgedrückt handelt es sich um das sogenannte "pre-autoclaving", das heißt daß eine mit sehr niedriger Feststoffkonzentration aufbereitete Aufschlämmung in einem Autoklaven zum Zwecke der Kristallisation, also zur Bildung von C-S-H-Verbindungen, der erforderlichen Hydrothermalreaktion unterworfen wird, was unter den Bedingungen des Wasserdampfdruckes erfolgt, wobei die gewählte Druckstufe primär darüber entscheidet, ob zum Beispiel Tobermorit, Xonotlit, Gyrolit oder andere C-S-H-Verbindungen entstehen. Dieses Verfahren hat schon in verfahrensmäßiger Hinsicht den großen Nachteil, daß es unbedingt ein stetiges Bewegen der dünnen Aufschlämmung im Autoklaven erfordert, das heißt daß unter Druck gerührt werden muß, weswegen der Autoklav mit einem Rührwerk ausgestattet sein muß. Dies ist technisch sehr problematisch und mit einem hohen Aufwand verbunden, da die der Autoklavenbehandlung unterworfene Aufschlämmung erhebliche Wasseranteile mit sich führt, die unnötigerweise aufgeheizt werden müssen, um überhaupt den Hydrothermalvorgang zu erreichen. Die so gebildeten Kristallisationsformen werden nach der Autoklavenbehandlung mittels geeigneter Entwässerungsvorrichtungen, wie Filterpressen, vom wie bereits erwähnt mit erheblichem Energieaufwand belasteten Überschußwasser befreit und zu Formkörpern ausgebildet, wonach diese Formkörper getrocknet werden. Von der Herstellung von Massen für Adsorptions- beziehungsweise Absorptionszwecke ist in der deutschen Offenlegungsschrift 2 328 842 keine Rede, da dieses Verfahren nicht darauf ausgerichtet ist. Wenn aus den Produkten des Verfahrens der deutschen Offenlegungsschrift 2 328 842 beispielsweise Granulate hergestellt würden, ergäben sich solche mit nur geringer Druckfestigkeit von weniger als 0,5 N/mm$^2$. Auch ergäbe sich, falls das zu Formkörpern gepreßte Produkt zerkleinert oder gar gepulvert würde, ein schmieriges, klebendes, zum Verklumpen und Quellen neigendes Verhalten, was durch Faserstoffe von der Art von Asbest oder cellulosehaltigen Materialien verstärkt wird.

Ferner ist in der deutschen Auslegeschrift 1 080 812 die Verwendung eines durch hydrothermale Umsetzung von Kalk mit kieselsäurehaltigem Material erhaltenen Calciumsilikates der Formel 2 CaO · 3 SiO$_2$ · 1 bis 2,5 H$_2$O als inertes

Trägermaterial für organische Schädlingsbekämpfungsmittel beschrieben. Als Verfahren zur Herstellung dieses Calciumsilikates ist angegeben, Kalk und reaktionsfähige kieselsäurehaltige Stoffe, wie Diatomeenerde, Quarz und Kieselsäuregel, in Molverhältnissen von CaO : $SiO_2$ von 0,05 bis 0,8 beispielsweise etwa 0,67 : 1, herzustellen und die Aufschlämmung in einem Reaktionsgefäß, vorzugsweise unter Bewegung, auf mindestens 182°C, vorzugsweise etwa 232°C, zu erwärmen, um die gewünschte Umsetzung zu bewirken. Es gilt also das im vorstehenden Absatz die deutsche Offenlegungsschrift 2 328 842 betreffend Gesagte auch in Bezug auf die deutsche Auslegeschrift 1 080 812. Hier sei nur zusammenfassend hervorgehoben, daß auch beim Verfahren der deutschen Auslegeschrift 1 080 812 alle die mit dem Verfahren der deutschen Offenlegungsschrift 2 328 842 verbundenen Nachteile, wie der sehr hohe Energieaufwand und die Umständlichkeit, bestehen, wozu noch die nur geringe Druckfestigkeit der Verfahrensprodukte und deren schmieriges, klebendes, zum Verklumpen und Quellen neigendes Verhalten hinzukommen. Daher können die Produkte der deutschen Auslegeschrift 1 080 812 allenfalls in gepulverter Form mit Teilchengrößen unter 100 µ als Trägermaterial, beispielsweise für Schädlingsbekämpfungsmittel, eingesetzt werden, während ihre Verwendung als Ab- beziehungsweise Adsorptionsmittel für Flüssigkeiten und Gase in vielen anderen Fällen wegen dieser Eigenschaften ausscheidet und ein Einsatz derselben in Form von Granulaten schlechthin ausgeschlossen ist.

Außerdem sind aus der US-Patentschrift 3 553 321 ein Verfahren zur Herstellung eines kohlendioxydhaltigen Calciumoxyd/Siliciumdioxyd-Produktes, bei welchem Kohlendioxyd in eine Reaktionsaufschlämmung einer Siliciumdioxydquelle, wie Diatomeenerde, Quarz oder Silicagel, und einer Calciumoxydquelle mit einem Molverhältnis von CaO : $SiO_2$ von

0,1 : 1 bis 1 : 1 und einem Feststoffgehalt von 0,024 bis 0,24 kg/l eingeführt wird und das Kohlendioxyd, die Siliciumdioxydquelle und das Calciumoxyd bei Temperaturen von 105 bis $316^{o}$C während eines Zeitraumes von etwa 30 Minuten bis 6 Stunden reagieren gelassen werden, sowie insekticide Mittel, welche als Träger die so erhaltenen Produkte erhalten, bekannt. Das die deutsche Auslegeschrift 1 080 812 betreffende Gesagte gilt auch für die US-Patentschrift 3 553 321.

Außerdem sind aus der deutschen Offenlegungsschrift 29 30 060 Mittel zur Bindung und Sanierung von animalen, biologisch ausgesonderten Schlackenprodukten, welche aus einem fein verteilten Calciumhydrosilikatmaterial, insbesondere gebrochenem oder gemahlenem Gas- oder Schaumbeton, bestehen oder dieses enthalten, bekannt. Das Calciumhydrosilikatmaterial, bei welchem es sich um ein übliches handelt, wird aus einer Grundmischung, die Sand oder Schieferasche als kieselsäurehaltiges Material sowie Kalk und/oder Zement als hydraulisches Bindemittel enthält, hergestellt, welcher Grundmischung zum Teil Wasser und zum Teil Aluminiumpulver als Treibmittel zugesetzt werden, wonach auf den Treibvorgang folgend das Gemisch auf die gewünschte Weise aufgeteilt und ausgebildet und anschließend unter erhöhtem Druck und erhöhter Temperatur dampfgehärtet wird. Von der Verwendung von mineralischen Naturprodukten und/oder industriellen Produkten mit hoher spezifischer Oberfläche, in welchen reaktionsfähiges $SiO_2$ vorliegt und/oder die $SiO_2$-Form von amorpher Struktur ist, als Ausgangsmaterialien ist in dieser Druckschrift keine Rede, indem die Silicium enthaltenden Ausgangsmaterialien Sand und Schieferasche sowie auch Zement kristallin sind und dabei höchstens unbedeutende Mengen von amorphem $SiO_2$ enthalten. Auf Seite 5, Zeilen 10 von unten bis 6 von unten dieser Druckschrift ist die "flüssigkeitsaufsaugende Fähigkeit", also die "Wasserabsorption"

beziehungsweise die "$H_2O$-Aufnahme" mit "im Durchschnitt
300 bis 400 ml Flüssigkeit pro Liter Absorbermaterial" angegeben. Die Umrechnung dieser Angabe auf Gewichtsprozente ergibt bei Zugrundelegung einer Rohdichte von 0,4 kg/dm$^3$
(der kleinsten in der genannten Druckschrift angegebenen
Rohdichte) einen Wert der Saugkapazität von nur 75 bis
100 Gew.-% (die 300 bis 400 ml Flüssigkeit entsprechen
300 bis 400 g Flüssigkeit und bei Einsetzen des zugrundegelegten Dichtewertes von 0,4 kg/dm$^3$ = 0,4 kg/1 ist 1 1 Absorbermaterial = 0,4 kg Absorbermaterial). Durch dieselbe
Berechnung ergibt sich bei einem Wert der Rohdichte von
0,65 kg/dm$^3$ eine Saugkapazität von nur 46 bis 62 Gew.-%.
Selbst beim nach der praktischen Erfahrung nach dieser
Druckschrift vorliegenden Wert des Schüttgewichtes von etwa
0,5 g/1 wäre die Saugkapazität in Wirklichkeit weniger als
100 Gew.-%, nämlich höchstens 80 Gew.-%.

Weiterhin sind aus der deutschen Offenlegungsschrift
26 40 341 Streumittel zur Aufnahme von Abfallstoffen und
Abwässern, insbesondere für die Kleintierhaltung, welche
aus einem aufgeschäumten festen Mineralstoffgemisch, welches aus 45 bis 55 Gew.-% Bindemittel, wie Kalk und/oder
gebranntem Kalk, 45 bis 55 Gew.-% Zuschlagstoffen, wie
Quarzsand, Bimssand, Flugasche, Ölschieferasche, Hochofenschlacke, gebranntem Ölschiefer und/oder Steinkohlenasche,
und 0,001 bis 10 Gew.-% Treibmittel bestehen kann, bekannt.
Diese Streumittel können in der Weise hergestellt werden,
daß Bindemittel, Zuschlagstoffe und Treibmittel unter Zugabe von Wasser, das erfahrungsgemäß nur in zur Einstellung
von Feststoffgehalten von 55 bis 65 Gew.-% entsprechenden
Mengen zugesetzt wird, miteinander vermischt werden, die
erhaltene Grundmischung 3 bis 5 Stunden lang gelagert wird,
bis die Gasentwicklung abgeschlossen ist, und 8 bis 10
Stunden lang einer Autoklavenbehandlung bei 150 bis 250$^o$C

unterworfen wird sowie das erhaltene feste Mineralstoffgemisch auf eine Korngröße von 2 bis 10 mm zerkleinert wird.
Dabei handelt es sich also um eine Gasbetonherstellung.
Nach der Erfahrung ist daher das Molverhältnis von
$CaO : SiO_2$ in den Ausgangsmaterialien unter 0,4 : 1. Auch
ist das Verfahren durch die Notwendigkeit der Erzeugung
eines Schaumes mit Verwendung eines Treibmittels und den
langen Auslagerungszeiten sowie der Notwendigkeit der kritischen Einstellung von hohen Feststoffgehalten von 55 bis
65 Gew.-% der Ausgangsmischung kompliziert.

Ferner ist in der deutschen Offenlegungsschrift
30 03 775 ein Verfahren zur Herstellung von Kalksandstein
mit betont visueller Wirkung, dessen Bindemittel von feinkörnigem gelöschtem Kalk mit einer spezifischen Oberfläche
von mehr als 1 000 $m^2$/kg und von feinkörnigem aus Quarzsand
bestehendem Füller mit einem freien $SiO_2$-Gehalt über 75%
und einer spezifischen Oberfläche von 100 bis 400 $m^2$/kg gebildet wird, und der ferner einen inerten Füll- und Gerüststoff, welcher Kalkstein, Dolomit oder Wollastonit sein
kann, enthält, beschrieben. Dieser Füll- und Gerüststoff
beteiligt sich nicht an der Reaktion zwischen dem Kalk und
Quarzsand. Alle diese Siliciumdioxyd enthaltenden Materialien sind kristallin und keine mineralischen Naturprodukte
beziehungsweise industrielle Produkte mit hoher spezifischer Oberfläche, in welchen reaktionsfähiges $SiO_2$ vorliegt
und/oder die $SiO_2$-Form von amorpher Struktur ist. Solche
Produkte haben eine Absorptionskapazität von nur etwa
20 Gew.-%.

Weiterhin ist aus der deutschen Offenlegungsschrift
21 30 540 ein Verfahren zur Herstellung von porösen Formkörpern aus Kalkmörtel mit und ohne Treibmittelzusätze,
bei welchen Umsetzungsprodukte von Gesteinsmehl und

Alkalisilikaten zu Kalkmörtelmischungen zugegeben werden,
wobei die Alkalisilikatzugabe den Zweck hat, einen leichteren Kalksandstein herzustellen, bekannt. Auch bei diesen Ausgangsmaterialien handelt es sich nicht um mineralische Naturprodukte und/oder industrielle Produkte mit hoher spezifischer Oberfläche, in welchen reaktionsfähiges
$SiO_2$ vorliegt und/oder die $SiO_2$-Form von amorpher Struktur
ist. Auch werden die Ausgangsmaterialien in Molverhältnissen
von CaO : $SiO_2$ unter 0,4 : 1 entsprechenden Mengen eingesetzt, wie es beim Gasbeton der Fall ist.

Außerdem ist in der deutschen Auslegeschrift 1 925 060
ein Verfahren zur Herstellung eines synthetischen Monocalciumsilikates mit im wesentlichen der Zusammensetzung von
natürlich vorkommendem Wollastonit, ausgehend von einem Gemisch von zu gleichen Teilen eingesetzten Quarzsand und
Kalk, die bei erhöhter Temperatur zur Umsetzung gebracht
werden, wobei der Mischung bis zu 15% natürlich vorkommende Tonerde mit Anteilen von $Na_2O$ und/oder $K_2O$ zugesetzt,
das Gemisch aufgeschmolzen, die Schmelze abgezogen und dabei zur Erzielung eines mindestens teilweise glasartigen
Endproduktes abgeschreckt wird, bekannt. Die Zielsetzung
des Verfahrens dieser Druckschrift ist offensichtlich die
Herstellung von Faserstoffen, welche Calciumsilikatfasern
genannt werden und gegenüber den Natriumsilikatfasern eine
höhere Alkaliresistenz aufweisen sollen. Auch beim im Verfahren der deutschen Auslegeschrift 1 925 060 als Siliciumdioxyd enthaltendes Ausgangsmaterial eingesetzten Quarzsand
handelt es sich um ein kristallines Material und nicht um
ein mineralisches Naturprodukt und/oder industrielles Produkt mit hoher spezifischer Oberfläche, in welchem reaktionsfähiges $SiO_2$ vorliegt und/oder die $SiO_2$-Form von
amorpher Struktur ist. Es wird im Schmelzverfahren gearbeitet, wobei gemäß den Beispielen der Kalk als Calciumcarbonat

mit einem CaO-Gehalt von 55,9% eingesetzt wird. Für die Ausgangsmaterialien des Beispieles 1 der deutschen Auslegeschrift 1 925 060 errechnet sich ein Molverhältnis von CaO : $SiO_2$ von 0,92 : 1.

Außerdem ist aus der deutschen Auslegeschrift 23 29 382 ein Verfahren zur Herstellung von weißen oder gefärbten, säure- und laugenfesten, kristallinen und hochfesten Kunststeinen unter Verwendung von Sand, Dolomit und/oder Kalkstein, bei welchem die aus Sand mit hohem Quarzgehalt, Dolomit und/oder Kalkstein und Natriumcarbonat und/oder Kryolith hergestellte Ausgangsmischung, welche aus 30 bis 60% $SiO_2$ , 0 bis 5% $Al_2O_3$ , 0 bis 2% $FeO + Fe_2O_3$ , 5 bis 30% MgO, 20 bis 40% CaO und 2 bis 10% $Na_2O + K_2O$ zusammengesetzt ist, gegebenenfalls in Gegenwart färbender Metalle und/oder Metallverbindungen, bei Temperaturen über 1 000°C geschmolzen und nach dem Gießen in entsprechende Formen spontan kristallisiert wird, bekannt. Auch bei diesem Verfahren werden als Siliciumdioxyd enthaltende Ausgangsmaterialien kristalline Stoffe und keine mineralischen Naturprodukte und/oder industriellen Produkte mit hoher spezifischer Oberfläche, in welchen reaktionsfähiges $SiO_2$ vorliegt und/oder die $SiO_2$-Form von amorpher Struktur ist, verwendet. Auch handelt es sich wiederum um ein Verfahren in der Schmelze, wobei ein Gießen zu Kunststeinen erfolgt. Überdies erfolgt nach dem Verfahren der deutschen Auslegeschrift 23 29 382 eine Umsetzung mit Natriumcarbonat und/oder Kryolith.

Ferner ist in der deutschen Auslegeschrift 20 46 688 ein Verfahren zur Hydratation von calciumhaltigen Silikaten durch Behandeln eines Gemisches aus Zement, kalkhaltigem Material und Wasser unter Druckeinwirkung von Wasserdampf bei Temperaturen in der Größenordnung von 188°C, bei welchem zur Hydratation von Calciumsilikat, das ein Molverhältnis von

$SiO_2$ : CaO zwischen 1 und 2 aufweist, durch Anrühren mit Wasser im Verhältnis von Wasser/Material von 0,1 bis 0,4 eine innige Mischung von 2 bis 15% Portlandzement und 85 bis 98% Monocalciumsilikat des angegebenen Typs hergestellt wird und die Mischung bei einer Temperatur von 100 bis 250°C und einem Druck von 1 bis 40,8 at Wasserdampf einer Autoklavenbehandlung unterzogen wird, wobei das Verhältnis von $SiO_2$ : CaO des synthetischen Silikates 1,13 beträgt, beschrieben. Auch die in diesem Verfahren verwendeten Materialien Portlandzement und Monocalciumsilikat sind kristalline Materialien und nicht mineralische Naturprodukte und/oder industrielle Produkte mit hoher spezifischer Oberfläche, in welchen reaktionsfähiges $SiO_2$ vorliegt und/oder die $SiO_2$-Form von amorpher Struktur ist.

In Silikattechnik 11 (1980), Seiten 331 und 332 sind Untersuchungen zur Phasenbildung im System $CaO-SiO_2-H_2O$ unter Autoklavbedingungen beschrieben. Dabei wurde auch ein Quarzsand mit einer spezifischen Oberfläche über 10 000 $cm^2$/g nach Blaine verwendet, dabei handelt es sich aber nicht um ein mineralisches Naturprodukt und/oder industrielles Produkt mit hoher spezifischer Oberfläche, in welchem reaktionsfähiges $SiO_2$ vorliegt und/oder die $SiO_2$-Form von amorpher Struktur ist. In den Ausgangsmaterialien wird ein Verhältnis von CaO : $SiO_2$ von 0,83 verwendet. Es ist nicht angegeben, ob es sich dabei um ein Gewichtsverhältnis oder um ein Molverhältnis handelt. Falls es sich um ein Gewichtsverhältnis handeln würde, dann entspräche ihm ein Molverhältnis von 0,89 : 1.

In Gundlach, Dampfgehärtete Baustoffe, 1973, Seiten 11, 14, 15, 32 bis 34 und 71 bis 74 sind zunächst lediglich Materialien mit geringer Korngröße und unter diesen auch mineralische Naturprodukte und/oder industrielle Produkte mit hoher spezifischer Oberfläche, in welchen reaktionsfähiges $SiO_2$ vorliegt und/oder die $SiO_2$-Form von amorpher
Struktur ist, als solche beschrieben. Von einer Reaktion
speziell solcher Materialien mit Calciumoxyd ist keine Rede. Vielmehr ist ausgeführt, daß Kieselgur im Bauwesen in
Deutschland wenig Bedeutung hat, während sie in anderen
Ländern zu Wärmedämmbetonen verarbeitet wird und hinsichtlich der Tone wird nur ausgesagt, daß sie die wichtigsten
silikatischen Zuschlagstoffe für die dampfgehärteten Baustoffe sind. Auf den Seiten 71 bis 74 der genannten Druckschrift wird dann lediglich das System $CaO-SiO_2-H_2O$ allgemein abgehandelt. Von der Umsetzung von mineralischen Naturprodukten und/oder industriellen Produkten mit hoher
spezifischer Oberfläche, in welchen reaktionsfähiges $SiO_2$
vorliegt und/oder die $SiO_2$-Form von amorpher Struktur ist,
mit Calciumoxyd beziehungsweise dieses enthaltenden Materialien ist jedoch keine Rede.

Der Erfindung liegt die Aufgabe zugrunde, ein einfaches mit
verhältnismäßig geringem Energieaufwand verbundenes Verfahren zur Herstellung von Silicium, Calcium und Sauerstoff
in gebundener Form enthaltenden Massen, mit welchem die an
sich günstigen ab- beziehungsweise adsorptiven Eigenschaften von mineralischen Naturprodukten und industriellen
Produkten trotz ihrer verschiedenen Qualität in großer Variation nutzbar gemacht werden können, wobei auch deren bisher unbrauchbares Feingut verwendet werden kann, indem diese in eine Form gebracht werden, welche den Einsatz als
hochwirksame Ab- beziehungsweise Adsorptionsmittel ermöglicht, wobei deren nachteilige natürliche Eigenschaften,
wie Quellen, Kleben und Verklumpen, kompensiert werden und
feste Granulate beziehungsweise Pulver in variabler Kornstruktur erhalten werden können sowie keine Faserstoffe
verwendet werden müssen, zu schaffen.

Das Obige wurde überraschenderweise durch die Erfindung
erreicht.

Es wurde nämlich nun überraschenderweise festgestellt,
daß solche Produkte dadurch erzielt werden können, daß
die mineralischen Naturprodukte und/oder industriellen
Produkte in Wasser dispergiert und mit einer solchen Menge Kalk beziehungsweise eines anderen CaO-haltigen Materiales vermischt werden, welche unter Anwendung einer
Autoklavenbehandlung zur Verfestigung der, insbesondere
feinteiligen, Naturprodukte und/oder industriellen Produkte erforderlich ist.

Gegenstand der Erfindung ist daher ein Verfahren zur
Herstellung von Silicium, Calcium und Sauerstoff in gebundener Form enthaltenden Massen durch Umsetzungen herbeiführendes Vermischen der Verbindungen von Silicium
und/oder Calcium mit Sauerstoff enthaltenden Ausgangsmaterialien in Molverhältnissen von CaO zu $SiO_2$ von nicht mehr als
0,75 : 1 entsprechenden Mengen unter Homogenisieren derselben in Wasser,
Formen, Autoklavenhärten und, gegebenenfalls nach einem Zerkleinern erfolgendes, Trocknen sowie gegebenenfalls Klassieren, welches dadurch gekennzeichnet ist, daß als Ausgangsmaterialien mineralische Naturprodukte und/oder industrielle Produkte mit hoher spezifischer Oberfläche, in
welchen reaktionsfähiges $SiO_2$ vorliegt und/oder die
$SiO_2$-Form von amorpher Struktur ist, und Calciumoxyd beziehungsweise dieses enthaltende Materialien sowie gegebenenfalls kristallines Siliciumdioxyd beziehungsweise
dieses enthaltende Materialien in Molverhältnissen von
CaO zu $SiO_2$ von 0,4 : 1 bis 0,75 : 1 entsprechenden Mengen eingesetzt werden und so durch das Homogenisieren in
Wasser und Autoklavenhärten die eingesetzten mineralischen Naturprodukte und/oder industriellen Produkte mit
frisch gebildetem Calciumsilikathydrat belegt werden.

Vorteilhaft werden als mineralische Naturprodukte
und/oder industrielle Produkte solche mit Teilchengrößen von weniger als 1 mm, vorzugsweise weniger als 100 u, insbesondere weniger als 60 µ, verwendet. Damit handelt es sich um eine Materialstruktur mit besonders hohem Wasserrückhaltevermögen.

Vorzugsweise werden im erfindungsgemäßen Verfahren als mineralische Naturprodukte und/oder industrielle Produkte mit hoher spezifischer Oberfläche solche mit einer spezifischen Oberfläche von mindestens 10 000 $cm^2/g$ nach Blaine eingesetzt.

Ferner ist es bevorzugt, als mineralische Naturprodukte und/oder industrielle Produkte Sepiolithe, silikatische Tonmineralien, Kieselerden, Bentonite, Kieselsäure, Füllstoffe und/oder industrielle Abfallstoffe, insbesondere solche, die den chemischen Aufbau und den Charakter von Kieselerden haben, zu verwenden. Ein Beispiel für im erfindungsgemäßen Verfahren verwendbare industrielle Abfallstoffe sind solche, welche bei der Aufbereitung von Flußspat anfallen und etwa 85 bis 93 Gew.-% $SiO_2$ mit reaktiver Oberfläche enthalten.

Vorzugsweise wird das Wasser zum Homogenisieren in zum Einstellen eines Feststoffgehaltes von mindestens 12 Gew.-%, insbesondere 12 bis 25 Gew.-%, entsprechenden Mengen verwendet.

Es ist auch bevorzugt, beim Umsetzungen herbeiführenden Vermischen der Ausgangsmaterialien unter Homogenisieren derselben in Wasser bei Reaktionstemperaturen von 60 bis 90°C zu arbeiten. Beim erfindungsgemäßen Verfahren kann aber auch beim Umsetzungen herbeiführenden Vermischen der Ausgangsmaterialien unter Homogenisieren derselben in Wasser bei normaler Raumtemperatur gearbeitet werden. So kann beim Ansetzen der mineralischen Naturprodukte und/oder industriellen Produkte, welches durch deren Dispergieren in einem Wasserüberschuß erfolgt, sowohl mit normaler Wassertemperatur als auch mit temperiertem
Wasser gearbeitet werden. Im Falle der Verwendung von
temperiertem Wasser wird ein solches mit einer Höchsttemperatur von etwa 70°C eingesetzt. Da beim erfindungsgemäßen Verfahren ein wesentlich geringerer CaO-Anteil,
bezogen auf $SiO_2$ , eingesetzt wird als bei den bekannten Verfahren, ist der durch das Löschen des Kalkes
freiwerdende Wärmebetrag entsprechend kleiner. Das Temperieren der Dispersion dient hierbei als Regulativ zum
Zwecke der Sicherstellung einer beschleunigten  Verfestigung des Stoffgemisches nach dem Einarbeiten des
Kalkes. Die Temperatur wird vorzugsweise so gewählt, daß
unter Einbeziehung der durch das Löschen des Kalkes entstehenden Wärmemenge die Reaktionstemperatur mindestens
60°C und höchstens 90°C erreicht. Der zum Temperieren
des Mischwassers (für die Dispersion) erforderliche Energiebetrag kann hierbei durch Nutzung der bei der Entspannung des Autoklaven freiwerdenden Dampfmenge gewonnen
werden, so daß insoweit keine zusätzliche Energie benötigt wird. Es wird vielmehr im Kreislauf eine Energieeinsparung erreicht, da durch das Temperieren der Dispersion
gleichermaßen die fertige Mischung aufgewärmt wird und
deren Temperaturinhalt in die Energiebilanz der Autoklavenhärtung voll eingeht.

Im erfindungsgemäßen Verfahren können das Formen,
Autoklavenhärten und Trocknen nach üblichen bekannten
Verfahren, beispielsweise dem in der US-Patentschrift
3 144 346 beschriebenen, durchgeführt werden. Analoges
gilt für das gegebenenfalls erfolgende Zerkleinern und
Klassieren.

Die Granulatherstellung kann aber auch vor dem Autoklavenerhärten und nicht erst danach durchgeführt werden.
Nach einer vorteilhaften speziellen Ausführungsform des erfindungsgemäßen Verfahrens wird daher schon vor dem Autoklavenhärten granuliert beziehungsweise zerkleinert. Diesbezüglich wird zweckmäßig in der Weise vorgegangen, daß die aufbereitete dünnbreiige Mischung in einer Granuliervorrichtung mit pulverigem kristallines Siliciumdioxyd enthaltendem Material, wie Quarzmehl, vermischt wird. Die mehlfeinen kristallines Siliciumdioxyd enthaltenden Materialien binden das in der dünnbreiigen Aufschlämmung enthaltene überschüssige Wasser, wobei Granulate mit einem Molverhältnis von CaO zu $SiO_2$ im oben angegeben Bereich entstehen. Bei dieser Ausführungsform übernimmt die Calciumoxyd und Siliciumdioxyd enthaltende wäßrige dünnbreiige Aufschlämmung die Funktion des Bindemittels. Diese Bindemittelfunktion wird durch die Verwendung der mineralischen Naturprodukte und/oder industriellen Produkte mit hoher spezifischer Oberfläche, wie von pulverigem Sepiolith, Kieselerde und Bentonit, gefördert, zumal wenn in diesen Materialien höhere Anteile von Aluminiumoxyd (Tonerde) enthalten sind. Die so unter Verwendung von bekannten Vorrichtungen zur Herstellung von Granulaten erzielten C-S-H-Granulate haben eine dem angestrebten Nutzkorn entsprechende Größe, wobei das entstehende Überkorn beziehungsweise Unterkorn durch Aussieben herausgenommen und in kontinuierlichem Ablauf dem weiteren Granuliervorgang zugeleitet werden kann. Die erzielten C-S-H-Granulate werden dann in an sich bekannter Weise der Autoklavenerhärtung mit dem Ergebnis unterzogen, daß nach abgeschlossener Autoklavenerhärtung bereits die angestrebte Endgröße des Granulates vorliegt. Da Zusammenbackungen unter den Bedingungen der Sattdampfeinwirkung im Autoklaven auftreten können, bewirkt der gegebenenfalls nachgeschaltete Zerkleinerungsvorgang lediglich eine Trennung von Zusammenbackungen. Durch diese Ausführungsform des erfindungsgemäßen Verfahrens wird die sonst übliche mehrstufige Zerkleinerung auf 1 Zerkleinerungsstufe mit dem Ergebnis einer Nutzkornausbeute von etwa 90 bis 93% verringert.
Bei ihr ist zwar der Wasseranteil im vorgeformten Granulat gegenüber den bekannten Verfahren deutlich vermindert, dies bleibt jedoch auf die Hydrothermalreaktion ohne nachteiligen Einfluß, da der zum Autoklavenhärten verwendete Wasserdampf eine hinreichende Durchfeuchtung gewährleistet.

Beim erfindungsgemäßen Verfahren wird durch den Einsatz der mineralischen Naturprodukte und/oder industriellen Produkte mit hoher spezifischer Oberfläche, in welchen reaktionsfähiges $SiO_2$ vorliegt und/oder die $SiO_2$-Form von amorpher Struktur ist, in Gegenwart von Calciumoxyd und unter Zugabe von Wasser die Reaktionsfähigkeit der ersteren zur Bindung von Überschußwasser benutzt, welches durch das CaO quasi gebunden wird, wodurch eine Materialversteifung eintritt, die zur Hydrothermalreaktion im Autoklaven genügt. Es entstehen hierbei bereits bei Temperaturen deutlich unter 100°C gleichzeitig labile C-S-H-Formen mit einem nicht definierten Kristallwasseranteil. Dieser Reaktionsmechanismus kann von kristallinem $SiO_2$ nicht bewirkt werden. Die Adsorptionsfähigkeit gegenüber Wasser ist bei kristallinem $SiO_2$ nahezu unbedeutend. Soweit die Bildung von labilen C-S-H-Formen stattfindet, so sind diese bei Verwendung von kristallinem $SiO_2$ zwar grundsätzlich existent, jedoch nur von untergeordneter Bedeutung.

Sofern kristallines Siliciumdioxyd und/oder ein dieses enthaltendes Material mit verwendet wird, wird beziehungsweise werden diese[s] zweckmäßig in Gewichtsverhältnissen von CaO zu kristallinem $SiO_2$ bis 1 : 1 beziehungsweise Gewichtsverhältnissen der mineralischen Naturprodukte und/oder industriellen Produkte zum kristallinen $SiO_2$ bis 0,8 : 1 entsprechenden Mengen eingesetzt. Es ist zweckmäßig, das Gewichtsverhältnis der mineralischen Naturprodukte und/oder industriellen Produkte mit hoher spezifischer Oberfläche, in welchen reaktionsfähiges $SiO_2$
vorliegt und/oder die $SiO_2$-Form von amorpher Struktur ist,
zum kristallinen Siliciumdioxyd um so höher zu wählen, je
weniger reaktionsfähig die ersteren sind (je geringere
reaktionsfähige Oberfläche sie haben). Anders ausgedrückt
soll das Mengenverhältnis der ersteren zu den letzteren
zweckmäßig so eingestellt werden, daß jeweils die Adsorptivkräfte ausreichen, um allein über den Weg der Wasseranlagerung Produkte mit niedrigen Schüttgewichten zu erzielen.

Durch das erfindungsgemäße Verfahren werden druckfeste
Massen, wie Granulate beziehungsweise Pulver, mit einer deutlich ausgeprägten Ad- beziehungsweise Absorptionskapazität
gegenüber Flüssigkeiten, wie Wasser und Öl, und Gasen erhalten. Die Absorption von Gasen durch die erfindungsgemäß hergestellten Massen ist zum Beispiel bei der Reinigung von Erdgas anwendbar. Hierbei übernehmen die erfindungsgemäß hergestellten Massen, wie Granulate beziehungsweise Pulver, die
Funktion eines Katalysators und sind nach der Beladung durch
Behandlung mit geeigneten Lösungsmitteln regenerierbar.

Vorzugsweise werden erfindungsgemäß Massen, wie Granulate beziehungsweise Pulver, mit Schüttgewichten von
0,2 bis 0,4 kg/l, insbesondere 0,25 bis 0,37 kg/l, erzielt.

Gegenstand der Erfindung sind auch Ab- beziehungsweise
Adsorptionsmittel für Flüssigkeiten und Gase, welche dadurch gekennzeichnet sind, daß sie durch das erfindungsgemäße Verfahren erhalten worden sind.

Die Erfindung bringt gegenüber dem Stand der Technik die
folgenden überraschenden Vorteile mit sich.

I) Sie bringt wesentliche Verfahrensvereinfachungen gegenüber den bekannten Verfahren mit sich.

a) Beim erfindungsgemäßen Verfahren wird der CaO-Anteil nur in solcher Menge eingesetzt, als es zur Verfestigung durch das unter den Bedingungen der Hydrothermalbehandlung entstehende Calciumsilikat und zur Verfestigung des mineralischen Naturproduktes und/oder industriellen Produktes, wie von feinstkörniger Kieselerde, erforderlich ist. C-S-H-Phasen entstehen nur als monomolekularer Film auf der Oberfläche der Teilchen der mineralischen Naturprodukte und/oder industriellen Produkte und bewirken die Verfestigung. Anders ausgedrückt muß erfindungsgemäß ein geringerer CaO-Anteil als bei den für Ab- beziehungsweise Adsorptionszwecke brauchbare Produkte ergebenden bekannten Verfahren eingesetzt werden.

b) Auf den Einsatz von kristallinem Siliciumdioxyd, wie Quarzmehl, kann ganz oder teilweise verzichtet werden.

c) Es sind keine kritischen Anforderungen an die Ausgangsmaterialien zu erfüllen.

d) Es sind auch keine kritisch festgelegten Verfahrensmaßnahmen beziehungsweise -bedingungen, wie das Einarbeiten von Schaum beziehungsweise bestimmten niedrigen Temperaturen und Reaktionszeiten, einzuhalten, indem es nicht erforderlich ist, auf die Erzielung einer besonders hohen Mikroporigkeit der C-S-H-Phasen hinzuarbeiten, indem die mineralischen Naturprodukte beziehungsweise industriellen Produkte hoher spezifischer Oberfläche ihre hohe Ab- beziehungsweise Adsorptionsfähigkeit ohnehin in die Produkte des erfindungsgemäßen Verfahrens hineinbringen. Anders ausgedrückt könnte auch eine 100%-ige Umsetzung des reaktiven $SiO_2$-Anteiles zu synthetischem Calciumsilikathydrat mit den Ausgangsstoffen des erfindungsgemäßen Verfahrens durchgeführt werden, bekanntlich haben aber Calciumsilikathydrate nicht die Ab- beziehungsweise Adsorptionskapazität wie mineralische Naturprodukte und industrielle Produkte hoher spezifischer Oberfläche, beispielsweise feinstteilige Kieselerden. Während also bei technisch reinen C-S-H-Phasen (100%-ige Umsetzung des reaktiven $SiO_2$-Anteiles) die Saugkapazität auf die Mikroporigkeit zurückgeführt werden muß, wird bei der nur teilweisen Umsetzung nach dem erfindungsgemäßen Verfahren und in Verbindung mit den erfindungsgemäß eingesetzten Ausgangsstoffen die Ab- beziehungsweise Adsorptionsfähigkeit der mineralischen Naturprodukte und/oder industriellen Produkte hoher spezifischer Oberfläche überlegen ohne Nachteile zur Verwertung gebracht, indem eine Verfestigung in dem Umfange erreicht wird, daß Granulate beziehungsweise Pulver erhalten werden können und die natürliche Quellfähigkeit der mineralischen Naturprodukte und/oder industriellen Produkte hoher spezifischer Oberfläche durch die Oberflächenbelegung mit C-S-H-Phasen unterbunden wird.

Beispielsweise haben Kieselerden ein ausgeprägtes Adsorptionsvermögen gegenüber Wasser von bis zu 300 Gew.-%, bezogen auf den Trockenzustand. Im Vergleich dazu ist die Wasserbindung von Quarzmehl höchstens etwa 50 Gew.-%. Zur Herstellung einer gießfähigen Aufschlämmung ist bei Verwendung von Kieselerde ein entsprechend hoher Wasseranteil erforderlich und schafft damit die Voraussetzung zu einer Auflockerung des Gefüges in einer Größenordnung, wie es zur Erzielung eines Endproduktes mit einem Schüttgewicht von $<0,4$ kg/l erforderlich ist. Dies ist ein weiterer Grund dafür, daß auf die Einarbeitung von mikroporigem Schaum gänzlich verzichtet werden kann.

e) Durch das Molverhältnis von CaO zu $SiO_2$, das heißt die mehr oder minder unvollständige Umsetzung zu C-S-H-Phasen kann die Ab- beziehungsweise Adsorptionsfähigkeit geregelt werden. Im Gegensatz dazu gilt dies nicht für Quarzmehl und Quarzsande, vielmehr setzt es die Verwendung von $SiO_2$-Formen, in welchen reaktionsfähiges $SiO_2$ vorliegt und/oder die $SiO_2$-Form von amorpher Struktur ist, voraus, was durch die erfindungsgemäß verwendeten Ausgangsstoffe sichergestellt wird.

f) Im erfindungsgemäßen Verfahren können auch die üblicherweise wegen ihrer zu geringen Korngröße unbrauchbaren Produkte mit feiner Korngröße als Ausgangsstoffe eingesetzt werden, da diese im erfindungsgemäßen Verfahren verfestigt werden und damit die Voraussetzung zur Herstellung von Granulaten beziehungsweise Pulvern mit ausgeprägtem Ab- beziehungsweise Adsorptionsvermögen geschaffen wird.

g) Da es im erfindungsgemäßen Verfahren im Gegensatz zu bekannten Verfahren nicht erforderlich ist, schon die wäßrige Aufschlämmung der Ausgangsmaterialien der Autoklavenbehandlung zu unterwerfen und erst danach zu formen und zu trocknen, sondern zuerst das Formen der Ausgangsmischung und dann das Autoklavenhärten durchgeführt werden, ist der Energieaufwand beim erfindungsgemäßen Verfahren stark verringert und es ist wesentlich einfacher.

h) Bei der Ausführungsform des erfindungsgemäßen Verfahrens, bei welcher vor dem Autoklavenhärten granuliert beziehungsweise zerkleinert wird, bieten die vorgeformten C-S-H-Granulate gegenüber den sonst üblichen steinartigen Formaten wesentlich günstigere Voraussetzungen für das Autoklavenhärten. Die dem Sattdampfdruck zugeordnete Temperatur kann ungehindert und unmittelbar in diese vorgeformten Granulate eindringen, wobei die Reaktionstemperatur analog zum Druckanstieg ohne Verzögerung erfolgt. So ist die chemische Reaktion zur Bildung von C-S-H-Produkten innerhalb 3 Stunden abgeschlossen.

- 25 -

II) Schon aus dem Obigen geht hervor, daß auch die
durch das erfindungsgemäße Verfahren hergestellten
Produkte denen des Standes der Technik überlegen
sind. Im einzelnen ergibt sich diesbezüglich folgendes.

a) Die nach dem erfindungsgemäßen Verfahren hergestellten Produkte haben gegenüber unter anderen denen der deutschen Auslegeschrift
29 02 079 sowie deutschen Offenlegungsschriften 29 02 108, 29 02 109, 29 02 101, 26 40 341
und 29 30 060  eine wesentlich höhere Ab- beziehungsweise Adsorptionsfähigkeit (höhere Speicherkapazität), bezogen auf das Schüttgewicht, infolge der Einbeziehung der noch latent vorhandenen
Ab- beziehungsweise Adsorptionskraft der vorzugsweise zumindest überwiegend $SiO_2$-
-amorphen Ausgangsmaterialien.

b) Auch die Ergiebigkeit ist bei den nach dem
erfindungsgemäßen Verfahren hergestellten Produkten im Vergleich unter anderen zu denen der deutschen
Auslegeschrift 29 02 079 sowie deutschen
Offenlegungsschriften 29 02 108, 29 02 109
und 29 02 101 wesentlich günstiger, da die
ersteren ein niedrigeres Schüttgewicht haben.

c) Ferner ist die auf das Schüttgewicht bezogene
Kornfestigkeit bei den erfindungsgemäß hergestellten Produkten im Vergleich unter anderen
zu denen der deutschen Auslegeschrift 29 02 079 sowie
deutschen Offenlegungsschriften 29 02 108,
29 02 109, 29 02 101 und 2 328 842, sowie der deutschen Auslegeschrift 1 080 812 und der
US-Patentschrift 3 553 321 deutlich höher
(geringerer Abrieb und höhere Staubfreiheit)
als bei den bekannten Produkten, was auf
die günstigere Beeinflussung infolge der
Mikrokapillarität, die bei den Produkten
mit Schaumzusatz in dieser Gleichmäßigkeit
nicht entsteht, zurückzuführen ist.

d) Die nach dem erfindungsgemäßen Verfahren
hergestellten Produkte sind auch den als
Ab- beziehungsweise Adsorptionsmittel
bekannten mineralischen Naturprodukten, wie
Sepiolith, und industriellen Produkten deutlich überlegen, da bei ihnen das für solche
Materialien bekannte Kleben, Quellen und
Klumpen nicht auftreten.

e) Daß im erfindungsgemäßen Verfahren ohne oberflächenaktive Mittel gearbeitet werden kann,
bringt außer der damit verbundenen Vereinfachung den überraschenden Vorteil mit sich,
daß damit die Porenstruktur deutlich begünstigt wird. Diese erscheint im Produkt als
eine homogene, mikroporige (Kapillarporen)
Struktur, die frei von Makroporen ist. Auch
dies ist ein deutlicher Unterschied zu den
bekannten Verfahren. Ferner wird mit dem Fortlassen der oberflächenaktiven Mittel eine
deutlich höhere Kornfestigkeit erzielt. Auch
ist insgesamt die Homogenität wesentlich besser.

f) Speziell gegenüber unter anderen den Produkten
der deutschen Offenlegungsschriften 28 32 125,
29 02 109, 29 02 101 und 2 328 842, sowie der
deutschen Auslegeschrift 1 080 812 und der
US-Patentschrift 3 553 321 bringen die nach dem
erfindungsgemäßen Verfahren hergestellten Produkte den großen Vorteil mit sich, daß sie
härter sind und so noch weniger zum Kleben und
Schmierigwerden neigen.

g) Nach der Ausführungsform des erfindungsgemäßen Verfahrens, bei welcher vor dem Autoklavenhärten granuliert beziehungsweise zerkleinert wird, werden C-S-H-Granulate mit besonders niedrigem Schüttgewicht unter Beibehaltung der anderen überlegenen Produktmerkmale
erhalten.

Auch speziell gegenüber den Verfahren der deutschen
Offenlegungsschrift 2 328 842, der deutschen Auslegeschrift
1 080 812 und der US-Patentschrift 3 553 321 ist die Erfindung überraschend. Im Gegensatz zu den Verfahren der deutschen Offenlegungsschrift 2 328 842, der deutschen Auslegeschrift 1 080 812 und der US-Patentschrift 3 553 321 wird
beim erfindungsgemäßen Verfahren die Ausgangsmischung der
Formgebung unterworfen und erst danach ein Autoklavenhärten
angewandt (im Gegensatz dazu kann bei den Verfahren der
deutschen Offenlegungsschrift 2 328 842, der deutschen Auslegeschrift 1 080 812 und der US-Patentschrift 3 553 321
nicht von einem Autoklavenhärten gesprochen werden, da der
Autoklavenbehandlung kein festes Material unterworfen wird),
das zu einer festen kristallisierten Phase von C-S-H-Verbindungen führt, die bereits die endgültigen mechanischen Produktdaten aufweisen, während dies nach der Autoklavenbehandlung gemäß der deutschen Offenlegungsschrift 2 328 842,
der deutschen Auslegeschrift 1 080 812 und der US-Patentschrift 3 553 321 nicht der Fall ist. Gegenüber den Verfahren der deutschen Offenlegungsschrift 2 328 842, der deutschen Auslegeschrift 1 080 812 und der US-Patentschrift
3 553 321, bei welchen ein großer Energieaufwand erforderlich ist, wie es weiter oben dargelegt wurde, kommt das erfindungsgemäße Verfahren mit einem mehrfach geringeren Energieaufwand aus.

Wegen der grundlegenden Verschiedenheit des erfindungsgemäßen Verfahrens gegenüber denen der deutschen Offenlegungsschrift 2 328 842, der deutschen Auslegeschrift 1 080 812
und der US-Patentschrift 3 553 321 sind auch die Eigenschaften der Produkte dieser Verfahren ganz verschieden. So werden nach dem erfindungsgemäßen Verfahren Massen, wie Granulate oder Pulver, für Adsorptions- beziehungsweise Absorptionszwecke mit überlegenen Eigenschaften erhalten, während
wie bereits erwähnt dies nach der deutschen Offenlegungsschrift 2 328 842 nicht vorgesehen ist und seinem Verfahren
und denen der deutschen Auslegeschrift 1 080 812 und der
US-Patentschrift 3 553 321 auch nicht zukommt, wobei durch
die Verfahren der deutschen Auslegeschrift 1 080 812 und
der US-Patentschrift 3 553 321 allenfalls in gepulverter
Form als Trägermaterial, beispielsweise für Schädlingsbekämpfungsmittel, verwendbare Produkte, deren Einsatz als
Granulate schlechthin ausgeschlossen ist, erhalten werden.
Speziell was die Herstellung der Granulate beziehungsweise
Pulver betrifft, sind beim erfindungsgemäßen Verfahren seine
Maßnahmen im Gegensatz zu den Verfahren der genannten Druckschriften so gewählt und optimiert, daß ein Maximum an Nutzkorn der gewollten Granulate beziehungsweise Pulver erzielt
wird, wobei diese Granulate beziehungsweise Pulver eine ausgeprägte Ab- beziehungsweise Adsorptionskapazität entwickeln.
Ferner werden nach dem erfindungsgemäßen Verfahren im Gegensatz zum Verfahren der deutschen Offenlegungsschrift
2 328 842, bei welchem wenn aus dessen Produkten Granulate
beziehungsweise Pulver hergestellt würden, was ohnehin nicht
vorgesehen ist, solche mit der geringen Druckfestigkeit von
weniger als 0,5 N/mm$^2$ erhalten würden, wie es auch bei den
Produkten der deutschen Auslegeschrift 1 080 812 und der
US-Patentschrift 3 553 321 der Fall ist, Granulate beziehungsweise Pulver mit überlegener hoher Druckfestigkeit erhalten. Beispielsweise hat das Produkt des Beispieles 9 der
vorliegenden Patentanmeldung bei einem Schüttgewicht von
0,242 kg/l eine Druckfestigkeit von 2,8 N/mm$^2$, das Produkt
des Beispieles 4 bei einem Schüttgewicht von 0,291 kg/l
eine Druckfestigkeit von 3,5 N/mm$^2$ und das Produkt des Beispieles 5 bei einem Schüttgewicht von 0,370 kg/l eine Druckfestigkeit von 4,8 N/mm$^2$. Auch der Grund hierfür und für
die wesentlich größere Härte der erfindungsgemäß hergestellten Granulate beziehungsweise Pulver liegt in der völligen
Verschiedenheit des erfindungsgemäßen Verfahrens von den
Verfahren der genannten Druckschriften, wobei noch dazu die
gemäß der erstgenannten Druckschrift verwendeten Faserstoffe die Festigkeit zusätzlich negativ beeinflussen.

Auch gegenüber den Verfahren der deutschen Offenlegungsschrift 2 328 842, der deutschen Auslegeschrift 1 080 812
und der US-Patentschrift 3 553 321 ist das erfindungsgemäße
Verfahren überraschend. Vom Chemismus her war es bekannt,
daß Reaktionen in flüssiger Phase, vor allem bei hohem Wasserüberschuß, wie es in der deutschen Offenlegungsschrift
2 328 842, der deutschen Auslegeschrift 1 080 812 und der
US-Patentschrift 3 553 321 der Fall ist, wegen des dadurch
bedingten beschleunigten Ionenaustausches und der damit
zustandegebrachten Aktivierung der Reaktionsgeschwindigkeit schneller ablaufen als in fester Phase in Gegenwart
von nur wenig losem Wasser. Dies ist der Grund, weshalb bei
den Verfahren der deutschen Offenlegungsschrift 2 328 842,
der deutschen Auslegeschrift 1 080 812 und US-Patentschrift
3 553 321 die Autoklavenbehandlung an einer wäßrigen Aufschlämmung mit großem Wasserüberschuß durchgeführt wurde.
Der Fachmann mußte nämlich erwarten, daß bei Durchführung
der Autoklavenbehandlung am geformten festen Material in
Gegenwart von nur wenig losem Wasser keine quantitative Umsetzung stattfände. Im Gegensatz dazu wurde erfindungsgemäß
überraschenderweise festgestellt, daß mit den erfindungsgemäß verwendeten Ausgangsstoffen auch bei Durchführung
der Autoklavenbehandlung am geformten festen Material dieselbe quantitative Umsetzung mit derselben Reaktionsgeschwindigkeit (demselben Temperatur/Zeit-Faktor) zu erzielen
ist wie in flüssiger Phase, wodurch aber die Nachteile der
Durchführung der Umsetzung in dieser, wie der stark erhöhte
Energieaufwand und Umständlichkeit, fortfallen und eine
überlegene technische einfache Verfahrenstechnik ermöglicht
wird, wozu noch überraschenderweise hinzukommt, daß auch
noch bessere Produkteigenschaften, wie eine höhere Druckfestigkeit, erhalten werden.

Ganz besonders vorteilhaft hebt sich die Ausführungsform des erfindungsgemäßen Verfahrens, bei welcher schon vor
dem Autoklavenhärten granuliert beziehungsweise zerkleinert
wird, von den Verfahren der deutschen Offenlegungsschrift
2 328 842, deutschen Auslegeschrift 1 080 812 und US-Patentschrift 3 553 321 nach welchen dies überhaupt nicht möglich ist, indem das Granulieren und Zerkleinern, wenn überhaupt, nur nach der Autoklavenbehandlung und Beseitigung
des überschüssigen Wassers erfolgen kann, ab. So kann erfindungsgemäß im Gegensatz zum Verfahren dieser Druckschriften
ein quasi-vorgefertigtes Granulat beziehungsweise Pulver

erhalten werden. Diese Ausführungsform des erfindungsgemäßen Verfahrens bringt den besonderen Vorteil mit sich, daß der nachteilige Feinanteil, der bei der Zerkleinerung anfällt, auf ein Mindestmaß herabgesetzt wird.

Auch die Angaben über die Molverhältnisse in der deutschen Offenlegungsschrift 2 328 842 vermochten für die Erfindung nichts herzugeben. Der in dieser Druckschrift angegebene allgemeine Bereich der Molverhältnisse von CaO zu $SiO_2$ von 0,5 : 1 bis 3,0 : 1 ist so weit, daß er praktisch alles Mögliche und sogar Unmögliche umfaßt (ein C-S-H-Produkt mit einem Molverhältnis von CaO zu $SiO_2$ von 3,0 : 1 ist geradezu absurd), also in Wirklichkeit überhaupt keine Festlegung darstellt. Der angegebene spezielle Bereich der Molverhältnisse von 0,75 : 1 bis 2,0 : 1 und das im Beispiel speziell verwendete Molverhältnis von CaO zu $SiO_2$ von 0,81 : 1 liegen aber außerhalb der erfindungsgemäßen Festlegung der Molverhältnisse von CaO zu $SiO_2$ von 0,4 : 1 bis 0,75 : 1, so daß also durch die deutsche Offenlegungsschrift 2 328 842 dem Fachmann letzten Endes abgeraten wurde, in diesem Bereich der Molverhältnisse zu arbeiten. Zudem umfaßt auch der in der deutschen Offenlegungsschrift 2 328 842 angegebene spezielle Bereich der Molverhältnisse von CaO zu $SiO_2$ von 0,75 : 1 bis 2,0 : 1 Mögliches und Abwegiges, da bei einem Molverhältnis von CaO zu $SiO_2$ von 2,0 : 1 der Mengenanteil des CaO den stöchiometrischen Mengenanteil gegenüber dem $SiO_2$ derart übersteigt, daß viel freies CaO übrigbleibt, denn der CaO-Anteil kann in die Kristallstruktur einer C-S-H-Verbindung nicht eingebaut werden. Solche Produkte mit viel freiem CaO unterlägen in starkem Maße dem Carbonisieren durch das atmosphärische Kohlendioxyd und die sich dann bildenden Calciumcarbonate unterlägen einer sehr starken Schwindung und führten zur Rißbildung in den so erhaltenen Produkten. Im Gegensatz dazu können diese Nachteile bei Verwendung eines Überschusses von
$SiO_2$ , wie es erfindungsgemäß erfolgt, in keinem Falle
auftreten.

Das erfindungsgemäße Verfahren unterscheidet sich von
dem der US-Patentschrift 3 553 321 zusätzlich darin, daß
im ersteren im Gegensatz zum letzteren kein Kohlendioxyd
als Ausgangsmaterial verwendet wird.

Gegenüber dem Verfahren der deutschen Offenlegungsschrift 29 30 060 mit seinen ganz anderen Ausgangsmaterialien bringt das erfindungsgemäße Verfahren den großen Vorteil der viel höheren Wasserabsorption beziehungsweise
$H_2O$-Aufnahme seiner Produkte mit sich. Nach dem erfindungsgemäßen Verfahren werden nämlich Produkte mit Werten der
Wasserabsorption beziehungsweise $H_2O$-Aufnahme über
100 Gew.-%, nämlich etwa 115 bis 200 Gew.-%, gegenüber unter 100 Gew.-% bei den Produkten des genannten bekannten
Verfahrens erreicht. Gerade hierauf kommt es aber besonders
an, da der Anwendungszweck dieser Materialien der zur Ab-
beziehungsweise Adsorption ist. Auch sei bemerkt, daß es
sich bei den Produkten der deutschen Offenlegungsschrift
29 30 060 in Wirklichkeit um solche mit einem Schüttgewicht
von etwa 0,5 kg/l handelt, während nach dem erfindungsgemäßen Verfahren Produkte mit Schüttgewichten von 0,24 bis
0,370 kg/l erhalten werden.

Vom Verfahren der deutschen Offenlegungsschrift
26 40 341 unterscheidet sich das erfindungsgemäße Verfahren darin, daß beim erfindungsgemäßen Verfahren im Gegensatz zum Verfahren der deutschen Offenlegungsschrift
26 40 341 die Ausgangsmaterialien in Molverhältnissen von
CaO : $SiO_2$ von 0,4 : 1 bis 0,75 : 1 entsprechenden Mengen
eingesetzt werden. Auch wird beim erfindungsgemäßen Verfahren im Gegensatz zum Verfahren der deutschen Offenlegungsschrift 26 40 341 kein Schäumen der Ausgangsmaterialien und damit kein Treibmittel verwendet, wobei in der Ausgangsmischung die Feststoffgehalte weiter variierbar sind und geringer gewählt werden können als beim Verfahren der deutschen Offenlegungsschrift 26 40 341. Somit liegt das erfindungsgemäße Verfahren vom Verfahren der deutschen Offenlegungsschrift 26 40 341 abseits. So sind auch die Produkte des erfindungsgemäßen Verfahrens denen der genannten Druckschrift hinsichtlich der Saugkapazität beziehungsweise der Wasseraufnahme, der Homogenität, der Druckfestigkeit und der durchgehenden mikroporigen Struktur überlegen. Die nach dem erfindungsgemäßen Verfahren hergestellten Produkte haben eine Saugkapazität beziehungsweise Wasseraufnahme von 114 bis 203 Gew.-% bei Schüttgewichten von 0,242 bis 0,370 kg/l gegenüber der auf Seite 6 der deutschen Offenlegungsschrift 26 40 341 angegebenen offensichtlich besten Wasseraufnahme von 105 Gew.-% bei einer Rohdichte von 0,65 kg/l und Erfahrungswerten von nur 76 bis 93 Gew.-% bei einem Schüttgewicht von etwa 0,55 kg/l. In diesem Zusammenhang ist zu bemerken, daß durch das erfindungsgemäße Verfahren geringere Schüttgewichte von 0,2 bis 0,4 kg/l als durch das Verfahren der deutschen Offenlegungsschrift 26 40 341, in welcher auf Seite 6 eine Rohdichte von 0,65 g/cm$^3$ ( = 0,65 kg/l) und auf Seite 2, Zeilen 13 bis 14 eine Rohdichte von 0,45 g/cm$^3$ ( = 0,45 kg/l) angegeben ist, welcher bei solchen Produkten mit makroporigem Gefüge höhere Werte der Schüttgewichte entsprechen, da bei diesen durch das Aufbrechen der großen Poren deren Hohlräume mit zerkleinertem Material gefüllt werden und damit eine höhere Packungsdichte entsteht, erzielt werden.

Wegen der Verwendung von mineralischen Naturprodukten und/oder industriellen Produkten mit hoher spezifischer Oberfläche, in welchen reaktionsfähiges $SiO_2$ vorliegt

und/oder die $SiO_2$-Form von amorpher Struktur ist, als Ausgangsmaterialien im erfindungegemäßen Verfahren, im Gegensatz zu den kristallinen Siliciumdioxyd enthaltenden Materialien noch dazu mit geringer spezifischer Oberfläche im Verfahren der deutschen Offenlegungsschrift
30 03 775 ist das erstere vom letzteren grundlegend verschieden. Dies gilt auch für die Produkteigenschaften. So
haben die Produkte des erfindungsgemäßen Verfahrens Werte
der Absorptionskapazität beziehungsweise Wasseraufnahme von
114 bis 203 Gew.-% gegenüber nur etwa 20 Gew.-% bei den Produkten der genannten Druckschrift, welchletztere deswegen
als Ab- beziehungsweise Adsorptionsmittel überhaupt nicht
in Frage kommt.

Auch vom Verfahren der deutschen Offenlegungsschrift
21 30 540 unterscheidet sich das erfindungsgemäße Verfahren
grundlegend darin, daß im ersteren im Gegensatz zum letzteren als Ausgangsmaterialien mineralische Naturprodukte
und/oder industrielle Produkte mit hoher spezifischer Oberfläche, in welchen reaktionsfähiges $SiO_2$ vorliegt und/oder
die $SiO_2$-Form von amorpher Struktur ist, verwendet werden.
Außerdem werden im erfindungsgemäßen Verfahren die Ausgangsstoffe in höheren Molverhältnissen von CaO zu $SiO_2$ als die
in der genannten Druckschrift entsprechenden Mengen eingesetzt.

Auch vom Verfahren der deutschen Auslegeschrift
1 925 060 unterscheidet sich das erfindungsgemäße Verfahren grundlegend darin, daß nach dem ersteren im Gegensatz
zum letzteren, in welchem als Siliciumdioxyd enthaltendes
Ausgangsmaterial Quarzsand verwendet wird, mineralische
Naturprodukte und/oder industrielle Produkte mit hoher
spezifischer Oberfläche, in welchen reaktionsfähiges $SiO_2$

vorliegt und/oder die $SiO_2$-Form von amorpher Struktur ist,
als Ausgangsmaterialien eingesetzt werden. Überdies werden
im erfindungsgemäßen Verfahren die Ausgangsmaterialien in
Wasser miteinander vermischt, dann geformt und danach autoklavengehärtet, während beim Verfahren der deutschen Auslegeschrift 1 925 060 die Mischung der Ausgangsmaterialien unmittelbar geschmolzen wird. Damit haben auch die Produkte
des erfindungsgemäßen Verfahrens mit den für Fasern bestimmten Produkten des Verfahrens der deutschen Auslegeschrift
1 925 060 nichts zu tun.

Dieselben grundlegenden Unterschiede wie zwischen dem
erfindungsgemäßen Verfahren und dem Verfahren der deutschen
Offenlegungsschrift 1 925 060 bestehen zwischen dem erfindungsgemäßen Verfahren und dem Verfahren der deutschen Auslegeschrift 23 29 382. Hinzukommt noch der weitere Unterschied, daß beim erfindungsgemäßen Verfahren keine Umsetzung
mit Natriumcarbonat und/oder Kryolith durchzuführen ist.

Auch vom Verfahren der deutschen Auslegeschrift
20 46 688 unterscheidet sich das erfindungsgemäße Verfahren
grundlegend darin, daß im ersteren im Gegensatz zum letzteren, bei welchem kristalline Siliciumdioxyd enthaltende Ausgangsmaterialien eingesetzt werden, als Ausgangsmaterialien
mineralische Naturprodukte und/oder industrielle Produkte
mit hoher spezifischer Oberfläche, in welchen reaktionsfähiges $SiO_2$ vorliegt und/oder die $SiO_2$-Form von amorpher Struktur
ist, verwendet werden, so daß auch die Produkte dieser beiden Verfahren grundlegend verschieden sind.

Zwischen dem erfindungsgemäßen Verfahren und dem in
Silikattechnik 11 (1980), Seiten 331 und 332 beschriebenen
Verfahren besteht derselbe grundlegende Unterschied hinsichtlich der Ausgangsmaterialien wie zwischen dem erfindungsgemäßen Verfahren und dem Verfahren der deutschen Auslegeschrift 20 46 688. Überdies werden im erfindungsgemäßen
Verfahren geringeren Molverhältnissen von CaO zu $SiO_2$ als
das in der genannten Druckschrift angegebene entsprechende Mengen der Ausgangsmaterialien verwendet.

Auf Grund der obigen überlegenen vorteilhaften Eigenschaften können die erfindungsgemäß hergestellten Produkte
beispielsweise für folgende Anwendungszecke eingesetzt werden.

Ölbinder,

Gasreiniger,          wie Erdgasreiniger (wobei die er-
                      findungsgemäß hergestellten Produk-
                      te die Funktion von Katalysatoren
                      übernehmen und, zum Beispiel nach
                      Beladen durch Behandlung mit Lö-
                      sungsmitteln regenerierbar sind),

Zuschlagstoffe für
mineralische Putze,

Füllmittel in mikronisierter Form,       beispielsweise für Kautschuk und
                      Kunststoffe,

Trägerstoffe in mikronisierter Form,    beispielsweise für Pflanzenschutz-
                      mittel und Farben,

Ab- beziehungsweise
Adsorptionsmittel
für Tabakdämpfe und
-verbrennungsproduk-
te                                                     und

Ab- beziehungsweise
Adsorptionsmittel
für Küchendünste.

Die Erfindung wird an Hand der folgenden Beispiele
näher erläutert.

## Beispiel 1

Es wurden die folgenden Ausgangsstoffe verwendet.

30,8 kg Sepiolith-Feingut

39,6 kg Quarzmehl

29,6 kg Weißfeinkalk mit 91 Gew.-% reaktivem CaO oder dieselbe CaO-Äquivalentmenge Kalkhydrat.

Diese wurden in Wasser in einer solchen Menge, daß auf 1 kg Weißfeinkalk 3 l Wasser fielen, eingebracht und durch kräftiges Rühren so vermischt, daß eine homogene und dünnbreiige Mischung entstand. Diese dünnbreiige Mischung wurde in an sich bekannter Weise in Formen gefüllt, in welchen sie sich durch die Kalkreaktion verfestigte, und der Autoklavenerhärtung unterworfen. Dadurch, daß die Sepiolithteilchen mit Calciumsilikathydrat-Neubildungen belegt wurden, wurde ein festes steinartiges Produkt erhalten. Nach entsprechendem Zerkleinern und Trocknen wurde ein körniges Produkt mit den folgenden Merkmalen erhalten.

Schüttgewicht:          0,33 kg/l

Wasserabsorption:       146 Gew.-%

Die Ausgangsstoffe und Daten des erhaltenen Produktes sind in den unten folgenden Tabellen 1 und 2 zusammengestellt beziehungsweise erläutert.

Dieses Produkt ist insgesamt dem Naturprodukt Sepiolith deutlich überlegen und kann vorteilhaft als Ab- beziehungsweise Adsorptionsmittel für Wasser und wäßrige Flüssigkeiten angewandt werden.

## Beispiele 2 bis 9

Nach der Verfahrensweise des Beispieles 1 wurden die
in den folgenden Tabellen 1 und 2 zusammengestellten beziehungsweise erläuterten Ausgangsstoffe mit Wasser aufbereitet. Auch die Daten der erhaltenen Produkte sind in
der folgenden Tabelle 1 zusammengestellt.

## Tabelle 1

| Menge der Ausgangsstoffe und Daten der Produkte | Beispiel Nr. | | | | | | | | |
|---|---|---|---|---|---|---|---|---|---|
| | 1 | 2 | 3 | 4 | 5 | 6 | 7 | 8 | 9 |
| | Art der mineralischen Naturprodukte beziehungsweise industriellen Produkte mit hoher spezifischer Oberfläche, in welchen reaktionsfähiges $SiO_2$ vorliegt und/oder die $SiO_2$-Form von amorpher Struktur ist [*] | | | | | | | | |
| | Se-pio-lith | Kie-sel-er-de | Kie-sel-er-de | Kie-sel-er-de | Kie-sel-er-de | Amor-phe Kiesel-säure | Ben-to-nit | $SiO_2$--Träger stoff A | $SiO_2$--Träger stoff B |
| Quarzmehl      in Gew.-% | 39,6 | 0 | 38,0 | 58,0 | 62,0 | 62,0 | 56,0 | 56,0 | 38,0 |
| Weißfeinkalk      in Gew.-% | 29,6 | 32,0 | 32,0 | 32,0 | 32,0 | 32,0 | 32,0 | 32,0 | 32,0 |
| | | | | | | | | | |

Fortsetzung der Tabelle 1

| Menge der Ausgangsstoffe und Daten der Produkte | Beispiel Nr. | | | | | | | | |
|---|---|---|---|---|---|---|---|---|---|
| | 1 | 2 | 3 | 4 | 5 | 6 | 7 | 8 | 9 |
| | Art der mineralischen Naturprodukte beziehungsweise industriellen Produkte mit hoher spezifischer Oberfläche, in welchen reaktionsfähiges $SiO_2$ vorliegt und/oder die $SiO_2$-Form von amorpher Struktur ist *) | | | | | | | | |
| | Se-pio-lith | Kie-sel-er-de | Kie-sel-er-de | Kie-sel-er-de | Kie-sel-er-de | Amor-phe Kiesel-säure | Ben-to-nit | $SiO_2$-Träger stoff A | $SiO_2$-Träger stoff B |
| Menge der mineralischen Naturprodukte beziehungsweise industriellen Produkte mit hoher spezifischer Oberfläche, in welchen reaktionsfähiges $SiO_2$ vorliegt und/oder die $SiO_2$-Form von amorpher Struktur ist in Gew.-% | 30,8 | 68,0 | 30,0 | 10,0 | 6,0 | 6,0 | 12,0 | 12,0 | 30,0 |

0111878

Fortsetzung der Tabelle 1

| Menge der Ausgangsstoffe und Daten der Produkte | Beispiel Nr. | | | | | | | | |
|---|---|---|---|---|---|---|---|---|---|
| | 1 | 2 | 3 | 4 | 5 | 6 | 7 | 8 | 9 |
| | Art der mineralischen Naturprodukte beziehungsweise industriellen Produkte mit hoher spezifischer Oberfläche, in welchen reaktionsfähiges $SiO_2$ vorliegt und/oder die $SiO_2$-Form von amorpher Struktur ist [*] | | | | | | | | |
| | Se-pio-lith | Kie-sel-er-de | Kie-sel-er-de | Kie-sel-er-de | Kie-sel-er-de | Amor-phe Kiesel-säure | Ben-to-nit | $SiO_2$-Trägerstoff A | $SiO_2$-Trägerstoff B |
| Wasser $\left[\dfrac{l}{kg\ Kalk}\right]$ in l | 3,0 | 6,0 | 6,0 | 6,0 | 4,0 | 6,0 | 4,0 | 4,0 | 6,0 |
| Molverhältnis CaO : $SiO_2$ | 0,72 | 0,66 | 0,53 | 0,47 | 0,46 | 0,45 | 0,55 | 0,45 | 0,53 |
| Feststoffgehalt in Gew.-% | 17 | 16 | 14 | 16 | 19 | 14 | 18 | 18 | 14 |
| Schüttgewicht in $\frac{kg}{l}$ | 0,33 | 0,305 | 0,256 | 0,291 | 0,370 | 0,252 | 0,355 | 0,360 | 0,242 |
| $H_2O$-Aufnahme in Gew.-% | 152 | 157 | 185 | 148 | 114 | 170 | 132 | 119 | 203 |

[*] Analyse siehe Tabelle 2

Tabelle 2

| Ausgangsstoff | | | | | |
|---|---|---|---|---|---|
| Bestand-teil | Sepiolith | Kieselerde | Bentonit | $SiO_2$-Trägerstoff A[*]) | $SiO_2$-Trägerstoff B[*]) |
| $SiO_2$ | 58,8 Gew.-% | 67,0 Gew.-% | 56,0 Gew.-% | 89,2 Gew.-% | 95,5 Gew.-% |
| $Al_2O_3$ | 1,41 Gew.-% | 5,0 Gew.-% | 20,6 Gew.-% | 0,8 Gew.-% | 0,5 Gew.-% |
| $AlF_3$ | 0 Gew.-% | 7,0 Gew.-% | 0 Gew.-% | 0 Gew.-% | 0 Gew.-% |
| $Fe_2O_3$ | 0,61 Gew.-% | 1,0 Gew.-% | 1,6 Gew.-% | 4,7 Gew.-% | 0,25 Gew.-% |
| CaO | 0,57 Gew.-% | 0 Gew.-% | 2,0 Gew.-% | 0,8 Gew.-% | 0,10 Gew.-% |
| $CaCO_3$ | 0 Gew.-% | 11,0 Gew.-% | 0 Gew.-% | 0 Gew.-% | 0 Gew.-% |
| MgO | 25,38 Gew.-% | 0 Gew.-% | 3,4 Gew.-% | 1,3 Gew.-% | 0,40 Gew.-% |
| $K_2O$ | 0,45 Gew.-% | 0 Gew.-% | 1,4 Gew.-% | 1,2 Gew.-% | 0,70 Gew.-% |

-43-

0111878

Fortsetzung der Tabelle 2

| Bestand-teil | Ausgangsstoff | | | | |
|---|---|---|---|---|---|
| | Sepiolith | Kieselerde | Bentonit | $SiO_2$-Trägerstoff A *) | $SiO_2$-Trägerstoff B *) |
| $Na_2O$ | 0,24 Gew.-% | 0 Gew.-% | 3,0 Gew.-% | 0,2 Gew.-% | 0,10 Gew.-% |
| $TiO_2$ | 0 Gew.-% | 3,0 Gew.-% | 0,3 Gew.-% | 0,01 Gew.-% | 0 Gew.-% |
| $CaF_2$ | 0 Gew.-% | 2,0 Gew.-% | 0 Gew.-% | 0 Gew.-% | 0 Gew.-% |
| SiC | 0 Gew.-% | 0 Gew.-% | 0 Gew.-% | 0,56 Gew.-% | 1,0 Gew.-% |
| Glühverlust | 11,04 Gew.-% | 0 Gew.-% | 8,6 Gew.-% | 3,40 Gew.-% | 1,5 Gew.-% |
| $H_2O$ | 0 Gew.-% | 4,0 Gew.-% | 0 Gew.-% | 0,52 Gew.-% | 0 Gew.-% |

*) wurde bisher als Füllstoff verwendet

Patentansprüche

## Patentansprüche

1.) Verfahren zur Herstellung von Silicium, Calcium und Sauerstoff in gebundener Form enthaltenden Massen durch Umsetzungen herbeiführendes Vermischen der Verbindungen von Silicium und/oder Calcium mit Sauerstoff enthaltenden Ausgangsmaterialien in Molverhältnissen von CaO zu $SiO_2$ von nicht mehr als 0,75 : 1 entsprechenden Mengen unter Homogenisieren derselben in Wasser, Formen, Autoklavenhärten und, gegebenenfalls nach einem Zerkleinern erfolgendes, Trocknen sowie gegebenenfalls Klassieren, dadurch gekennzeichnet, daß man als Ausgangsmaterialien mineralische Naturprodukte und/oder industrielle Produkte mit hoher spezifischer Oberfläche, in welchen reaktionsfähiges $SiO_2$ vorliegt und/oder die $SiO_2$-Form von amorpher Struktur ist, und Calciumoxyd beziehungsweise dieses enthaltende Materialien sowie gegebenenfalls kristallines Siliciumdioxyd beziehungsweise dieses enthaltende Materialien in Molverhältnissen von CaO zu $SiO_2$ von 0,4 : 1 bis 0,75 : 1 entsprechenden Mengen einsetzt und so durch das Homogenisieren in Wasser und Autoklavenhärten die eingesetzten mineralischen Naturprodukte und/oder industriellen Produkte mit frisch gebildetem Calciumsilikathydrat belegt.

2.) Verfahren nach Anspruch 1, dadurch gekennzeichnet, daß man als mineralische Naturprodukte und/oder industrielle Produkte solche mit Teilchengrößen von weniger als 1 mm, vorzugsweise weniger als 100 μ, insbesondere weniger als 60 μ, verwendet.

3.) Verfahren nach Anspruch 1 oder 2, dadurch gekennzeichnet, daß man als mineralische Naturprodukte und/oder industrielle Produkte Sepiolithe, silikatische Tonmineralien, Kieselerden, Bentonite, Kieselsäure, Füllstoffe und/oder industrielle Abfallstoffe verwendet.

4.) Verfahren nach Anspruch 1 bis 3, dadurch gekennzeichnet, daß man das Wasser zum Homogenisieren in zum Einstellen eines Feststoffgehaltes von mindestens 12 Gew.-% , insbesondere 12 bis 25 Gew.-%, entsprechenden Mengen verwendet.

5.) Verfahren nach Anspruch 1 bis 4, dadurch gekennzeichnet, daß man beim Umsetzungen herbeiführenden Vermischen der Ausgangsmaterialien unter Homogenisieren derselben in Wasser bei Reaktionstemperaturen von 60 bis 90°C arbeitet.

6.) Verfahren nach Anspruch 1 bis 5, dadurch gekennzeichnet, daß man schon vor dem Autoklavenhärten granuliert beziehungsweise zerkleinert.

7.) Ab- beziehungsweise Adsorptionsmittel für Flüssigkeiten und Gase, dadurch gekennzeichnet, daß sie durch das Verfahren nach Anspruch 1 bis 6 erhalten worden sind.

Zusammenfassung